Europäisches Patentamt

European Patent Office

Office européen des brevets

(19)

(11) **EP 0 549 517 B1**

(12) **EUROPÄISCHE PATENTSCHRIFT**

(45) Veröffentlichungstag und Bekanntmachung des Hinweises auf die Patenterteilung:
**15.05.1996  Patentblatt 1996/20**

(51) Int Cl.$^6$: **H04Q 1/444**, H04Q 1/457, H04L 27/30, H04Q 1/46

(21) Anmeldenummer: **92810718.4**

(22) Anmeldetag: **18.09.1992**

(54) **Circuit de détermination de niveau pour une fréquence prédéterminée d'un signal à fréquence audio.**

Level determining circuit for a predetermined frequency of an audio frequency signal

Circuit de détermination de niveau pour une fréquence prédéterminée d'un signal à fréquence audio

(84) Benannte Vertragsstaaten:
**CH DE DK FR GB IT LI**

(30) Priorität: **24.09.1991  CH 2832/91**

(43) Veröffentlichungstag der Anmeldung:
**30.06.1993  Patentblatt 1993/26**

(73) Patentinhaber: **Alcatel STR AG**
**CH-8055 Zürich (CH)**

(72) Erfinder: **Knitsch, Martin A.**
**CH-8906 Bonstetten (CH)**

(56) Entgegenhaltungen:
**GB-A- 2 219 174**

• **INTERNATIONAL CONFERENCE ON ACOUSTICS, SPEECH AND SIGNAL PROCESSING Bd. 2, 23. Mai 1989, GLASGOW, SCOTLAND Seiten 1134 - 1137 , XP90308 S.L. GAY ET AL. 'Algorithms for Multi-channel DTMF detection for the WE DSP32 family'**
• **EDN Bd. 30, Nr. 6, 1985, BOSTON, MA - USA Seiten 205 - 220 P.MOCK 'Add DTMF generation and decoding to DSP-uP designs'**

## Beschreibung

Die vorliegende Erfindung betrifft ein Verfahren zur Ermittlung der Pegel eines eingehenden Tonfrequenzsignales bei wählbaren, vorbestimmten Frequenzen mit digitaler Signalverarbeitung gemäss dem Oberbegriff des ersten Anspruches und insbesondere dessen Verwendung in einem Wählzeichenempfänger für Mehrfrequenz-Wählsignale in einer Nachrichtenvermittlungsanlage.

In der nachfolgenden Beschreibung werden verschiedene Verweise auf die folgende Literatur gemacht:

[1] ADSP-2100 Family applications Handbook, Ausg. 2, 6-22 bis 6-25 Analog Devices Inc.

[2] Zoicas A., Grohe K.: 8-Kanal-DTMF-Empfänger: Keine weitere Hardware mehr nötig: Elektronik, 16/4, 1989, p. 65-62

[3] Oppenheim A., Schafer R.: Digital Signal Processing, Prentice Hall, Egelwwod Cliffs, NJ, 1975, p. 290 ff

[4] Goertzel G.: An Algorithm for the Evaluation of Finite Trigonometric Series, American Mathematics Monthly, Vol. 5, Jan. 1958

[5] Digital signal Processing Applications with the TMS320 Family: p. 552-555, Texas Instruments

[6] Verdun F.R., Giancaspro C., Marshall A.G.: Effects of Noise, Time-Domain Damping, Zero-Filling on the "Exact" Interpolation of Fast Fourier Transform Spectra: Applied Spectroscopy, Vol 42, Nr. 5, 1988, p. 715 - 721.

Wählzeichenempfänger für Mehrfrequenz-Wählsignale in Fernsprechanlagen sind z.B. in [1] und [2] beschrieben. Da beim Mehrfrequenzwählverfahren die Signalisierung im Sprachband erfolgt, ist ein Sprachschutz erforderlich, um Wählzeichen auch bei gleichzeitiger Uebertragung von Sprachsignalen oder dergleichen erkennen zu können bezw. um zu verhindern, dass Sprachsignale als Wählzeichen interpretiert werden. Diese Sprachschutzforderung hat zu einem Zweifrequenzcode geführt. Dabei ist jeder Wählziffer oder jedem allfälligen Sonderzeichen eine Kombination von zwei gleichzeitig ausgesandten Signalen jeweils bestimmter Frequenz zugeordnet, wobei die beiden Frequenzen zwei deutlich voneinander beabstandeten Gruppen angehören. Die beiden Frequenzgruppen bestehen je aus vier unterschiedlichen Frequenzen, so dass insgesamt 16 Zeichen möglich sind. Dabei sind die Frequenzen so gewählt, dass kein harmonisches Verhältnis zwischen den Grundtönen, deren Harmonischen und den jeweiligen Intermodulationsprodukten besteht. Als weiterer Schutz gegen zufällige Imitation von Wählsignalen durch Sprachsignale müssen die absoluten und relativen Pegel der beiden Frequenzen eines Zeichens innerhalb festgelegter Grenzen liegen.

Die Forderung nach Abwesenheit jedes harmonischen Verhältnisses zwischen Grundtönen, deren Harmonischen und den jeweiligen Intermodulationsprodukten führt nun dazu, dass die Abstände der Frequenzen der beiden Gruppen sehr unterschiedlich sind, was verschiedene bekannte Verfahren zur Ermittlung der Pegel dieser Frequenzen, also zur Erkennung derselben, entweder wegen unzureichender Genauigkeit oder zu grossem Aufwand als ungeeignet erscheinen lässt.

Das Mehrfrequenzwählverfahren eignet sich sowohl für Fernmeldenetze mit analoger als auch in solchen mit digitaler Signalisierung. Bei analoger Signalisierung und digitaler Verarbeitung der Wählinformation im Wählzeichenempfänger muss natürlich das analoge Eingangssignal vor der Verarbeitung digitalisiert werden. Der Wählzeichenempfänger entnimmt seinem Eingangssignal eine gewisse Anzahl von Abtastwerten. Die genaue Anzahl ergibt sich aus der Abtastfrequenz und der Beobachtungsdauer. Bei der heute üblichen PCM-Codierung im Falle von digitaler Signalisierung kann die Abtastfrequenz 8 kHz nicht übersteigen. Die maximale Beobachtungsdauer ist begrenzt durch die minimal erforderliche Tastenbetätigungsdauer. Diese und die Pausendauer sind durch das Signalisierungsprotokoll des betreffenden Fernmeldenetzes festgelegt. Solche Signalisierungsprotokolle sind z.B. "DTMF", "R1" oder "R2" und sind in den CCITT-Empfehlungen Q.23 und Q.24, Q.320 und Q.323 bezw. Q.454 und Q. 455 festgelegt.

Bei Wählzeichenempfängern mit digitaler Signalverarbeitung hängt die maximale Anzahl der Abtastwerte, die für die Erkennung eines einzelnen Wählzeichens verwendet werden können, aber auch von der Art der Verarbeitung durch die Recheneinheit, deren Leistungsfähigkeit und der Anzahl der zu überwachenden Kanäle ab.

Herkömmliche Wählzeichenempfänger mit digitaler Signalverarbeitung entnehmen N Abtastwerte aus dem Eingangssignal und ermitteln anhand dieser die Pegel des Eingangssignales bei den interessierenden Frequenzen. Dazu machen sie eine Diskrete Fourier-Transformation (DFT) dieser Abtastwerte.

Es wäre denkbar, die DFT nur bei den interessierenden Frequenzen zu machen, was aber bei digitaler Integration zu grossem Aufwand führen würde. Ferner wäre auch denkbar, die DFT gemäss einer Fast Fourier-Transformation (FFT) zu machen, wie dies z.B. in [3] beschrieben ist. Dabei würde man die Pegel bei N/2 regelmässig verteilten Frequenzen erhalten. Dabei müsste $N = 2^x$ sein und dürfte wegen der geforderten Genauigkeit nicht beliebig klein sein. Die Pegel der interessierenden Frequenzen müssten darauf mit Hilfe von Interpolationsverfahren ermittelt werden. Wenn die Anzahl der interessierenden Frequenzen wesentlich kleiner als N/2 ist und diese zudem unregelmässig verteilt sind, so führt eine FFT kombiniert mit Interpolationsverfahren zu einem unnötig hohen Aufwand, da dabei auch die Pegel bei vielen Frequenzen, die gar nicht interessieren, ermittelt werden müssen.

Die acht von der CCITT in ihrer Empfehlung Q.23 für das DTMF-Mehrfrequenzwählverfahren standardisierten Frequenzen sind unregelmässig verteilt. Aus [2] ist es bekannt, die DFT gemäss dem Goertzel-Algorithmus auszuführen. Bei diesem Verfahren wird, im Gegensatz zur FFT, der Algorithmus nicht auf einen bereits gespeicherten Datensatz angewendet, sondern auf einen sequentiellen Datenstrom. Dies bedeutet, dass die Eingangswerte nicht gespeichert werden müssen, was den internen Datenspeicher stark reduziert. Eine mögliche Ausführungsart dieses Algorithmus wurde von G. Goertzel in [4] beschrieben.

Aus dem Dokument GB-A-2 219 174 ist ferner ein Wahlzeichenempfänger bekannt, bei dem ein eingehendes Mehrfrequenz-Wählsignal abgetastet wird und die erhaltenen Abtastwerte einer Diskreten Fourier-Transformation gemäß dem Goertzel-Algorithmus unterworfen wird.

Mit Hilfe des Goertzel-Algorithmus kann man die Pegel des Eingangssignales, d.h. die Amplitude der Fourier-Transformierten auch bei nur ausgewählten Frequenzen ermitteln. Allerdings können diese Frequenzen nur unter gewissen, regelmässig in einem von N und der Abtastfrequenz abhängigen Abstand verteilten Frequenzen ausgewählt werden. Liegen die interessierenden Frequenzen nicht auf diesem Raster von Frequenzen, so muss wieder ein Interpolationsverfahren zu Hilfe genommen werden. Eine Erhöhung von N ergibt eine Verfeinerung des Rasters.

Eine geringfügige Erhöhung von N bedeutet jedoch nicht unbedingt eine Verbesserung, da, mindestens bei unregelmässig beabstandeten interessierenden Frequenzen, deren Abstände vom Raster im Schnitt höher werden können. Einer starken Erhöhung von N sind, mindestens bei einem Wählzeichenempfänger, durch die nach oben begrenzte Abtastfrequenz und durch die maximal zulässige Beobachtungszeit Grenzen gesetzt, andernfalls setzt der stark ansteigende Verarbeitungsaufwand Grenzen.

Gemäss der erwähnten CCITT-Empfehlung Q.23 darf bei einem Wählzeichenempfänger die Beobachtungszeit 40 ms und die Abtastfrequenz 8 kHz nicht übersteigen. Dies bedeutet, dass bei einem die Werte der obigen Empfehlung erfüllenden Wählzeichenempfänger der Wert von N kleiner als 320 sein muss. Technische Gründe, insbesondere zeitliche Beschränkungen legen nahe, den Wert von N sogar kleiner als 250 zu wählen. Bei N = 250 und einer Abtastfrequenz von 8 kHz ergibt sich somit ein Rasterabstand von 32 Hz. Es gibt viele Publikationen, in denen das Problem einer optimalen Wahl von N diskutiert wird. Für die acht DMTF-Frequenzen als interessierende Frequenzen ist dies z.B. der Fall in [1] und [5].

Um den Rasterabstand kleiner zu machen, kann man sich des in der Signalverbeitung bekannten Verfahrens des Auffüllens mit Nullwerten - in der englischsprachigen Literatur "Zero Filling" genannt - bedienen, bei dem zur Analyse zeitbegrenzter Signale nicht nur die N gemessenen Abtastwerte verwendet werden, sondern auch noch M Nullwerte in die Rechnung einfliessen. Dadurch ändert sich nichts am Signalspektrum, es wird lediglich an mehr Stellen berechnet, der Abstand der DFT-Komponenten ist nicht mehr F/N, sondern F/(N+M), d.h. der Rasterabstand wird kleiner. Dabei ist es völlig gleichgültig, an welcher Stelle der Berechnung die Nullwerte eingesetzt werden, vorausgesetzt, die signifikanten Daten bleiben beisammen.

Falls für die Pegelbestimmung bei bestimmten Frequenzen Interpolationsverfahren herangezogen würden, könnte allerdings das Auffüllen mit Nullwerten einen negativen Einfluss auf die relative Genauigkeit der Interpolation haben. Dieser negative Einfluss wird z.B. in [6] erläutert.

Es ist nun Aufgabe der Erfindung, ein Verfahren zur Ermittlung der Pegel eines eingehenden Tonfrequenzsignales bei wählbaren, vorbestimmten Frequenzen mit digitaler Signalverarbeitung anzugeben, mittels welchen Verfahrens entweder mit einer gegebenen Anzahl von Abtastwerten die Pegel des Eingangssignales bei den vorgegebenen Frequenzen mit grösserer Genauigkeit ermittelt werden können als mit bekannten Verfahren oder diese Pegel mit gleicher Genauigkeit wie mittels bekannter Verfahren, aber mit einer kleineren Anzahl von Abtastwerten ermittelt werden können, wobei eine mit bekannten Verfahren vergleichbare Rechnerleistung notwendig ist.

Gelöst wird diese Aufgabe durch die im Kennzeichen des ersten Anspruchs genannten Merkmale. Vorteilhafte Weiterbildungen der Erfindung können den abhängigen Ansprüchen entnommen werden.

Das erfindungsgemässe Verfahren kombiniert also die vorteilhaften Wirkungen einer DFT gemäss dem Goertzel-Algorithmus, welcher die sequentielle Berechnung der Pegel des Eingangssignales beschränkt auf ausgewählte Frequenzen erlaubt, mit dem Auffüllen mit Nullwerten, was ohne Erhöhung der Rechnerleistung eine fast beliebige Verfeinerung des Frequenzrasters erlaubt, so dass Interpolationsverfahren nicht mehr notwendig sind,

Der Goertzel-Algorithmus ist eine besondere Methode der DFT, deren Vorteil darin besteht, dass die einzelnen Abtastwerte fortlaufend mit ihrem Eintreffen verarbeitet werden. Bei der normalen DFT müssen zuerst alle Abtastwerte vorliegen, bevor mit der Berechnung des Frequenzspektrums begonnen werden kann. Dieser Algorithmus wird insbesondere dann angewendet, wenn man nicht am vollständigen Spektrum eines Signales interessiert ist, sondern nur an einigen wenigen Spektralkomponenten. Dadurch ergibt sich eine Verringerung des Rechenaufwandes.

Es sei nun F die Abtastfrequenz und N die Anzahl der Abtastwerte, die zur Spektralanalyse herangezogen werden sollen. Dann kann der Goertzel-Algorithmus, wie jede DFT, die Signalstärken an den Spektrallinien oder DFT-Komponenten:

$$f(n) = n \, \frac{F}{N} \, , \qquad n = 0, 1, 2, \ldots \frac{N}{2} - 1 \qquad\qquad (1)$$

liefern. Bei F = 8000 Hz und N = 200 ergeben sich Spektralinformationen bei 40, 80, 120,... 3960 Hz.

Zentrale Bedeutung kommt dabei gewissen Koeffizienten zu, die in die Berechnung eingehen. Für die Ermittlung des Pegels an der n-ten Spektrallinie mit der Frequenz f(n) = F n/N hat dieser Koeffizient den Wert:

$$C(n) = \cos 2\pi \frac{n}{N} = \cos 2\pi \frac{f(n)}{F} \qquad (2)$$

Wendet man das bereits erwähnte Auffüllen mit Nullwerten auf den Goertzel-Algorithmus an und setzt dabei die Nullwerte zu Anfang der Berechnung ein, d.h. als Abtastwerte, die zeitlich vor den signifikanten Abtastwerten kommen, so stellt man fest, dass die iterierten Werte U(k) in [4] ihren Startwert Null überhaupt nicht ändern, solange die Eingangswerte Null bleiben, d.h. der Algorithmus tritt sozusagen auf der Stelle. Die zu den signifikanten Abtastwerten gehörenden Werte von U(k) nehmen dieselben Werte an, unabhängig davon, wieviele Nullwerte vorher eingeschoben wurden. Dies bedeutet, dass der Rechenaufwand genau gleich bleibt wie ohne eingeschobene Nullwerte, da die Berechnungen mit den Nullwerten gar nicht durchgeführt werden müssen.

Es ist zu erwähnen, dass das Einfügen von Nullwerten am Ende der Berechnung die bisherigen U(k) verändern würde; der Betrag des Pegels

$$\sqrt{C^2+S^2}$$

würde allerdings immer noch richtig sein.

Wenn man F = 8000 Hz, N = 200 und M = 7800 wählt, sind die DFT-Komponenten nur noch 1 Hz auseinander. Gleichung (1) geht dann über in:

$$f(n) = n \frac{F}{N+M} \qquad n = 0, 1, 2,... \frac{N+M}{2} -1 \qquad (3)$$

und die zugehörigen Goertzel-Koeffizienten gemäss Gleichung (2) werden zu:

$$C(n) = \cos \frac{2\pi n}{N+M} = \cos \frac{2\pi f}{F} \qquad (4)$$

In letzter Konsequenz (M → ∞) ist es dann auch möglich, die Koeffizienten für jede beliebige Frequenz f < F/2 anzugeben:

$$C(f) = \cos \frac{2\pi f}{F} \qquad (5)$$

Dies bedeutet, dass mit Hilfe des Goertzel-Algorithmus auch bei einer sehr kleinen Anzahl von Abtastwerten die Spektralkomponenten eines Signals an jeder beliebigen Frequenz ermittelt werden können, wenn die Koeffizienten gemäss Gleichung (5) verwendet werden. Es besteht keine Notwendigkeit, sich auf das durch die Anzahl der Abtastwerte gegebene Frequenzraster zu beschränken und den sog. leakage-Effekt in Kauf zu nehmen. Dieser Effekt entsteht dann, wenn man eine DFT nur an den durch die Anzahl der Abtastwerte festgelegten Stellen durchführt, aber durch Interpolation Spektralanteile des Signales an Stellen ermitteln muss, die nicht genau mit diesen durch die Anzahl der Abtastwerte festgelegten Stellen übereinstimmen.

Das erfindungsgemässe Verfahren lässt sich mit Vorteil in einem Wählzeichenempfänger für Mehrfrequenz-Wählsignale in einer Nachrichtenvermittlungsanlage einsetzen, wenn z.B. mehr Kanäle als üblich überwacht werden sollen. Es lässt sich aber auch in Netzwerktestgeräten einsetzen, bei welchen nicht nur, wie bei Wählzeichenempfängern von Fernsprechanlagen, geprüft werden soll, ob die Pegel des Eingangssignales bei gewissen Frequenzen einen gegebenen Schwellwert übersteigen, sondern der Absolutwert der Pegel bei diesen Frequenzen möglichst genau ermittelt werden soll. Zudem gestattet das vorliegende Verfahren in vielen Fällen mit kleinerer Rechnerleistung auszukommen, als dies bei vergleichbaren Verfahren möglich ist.

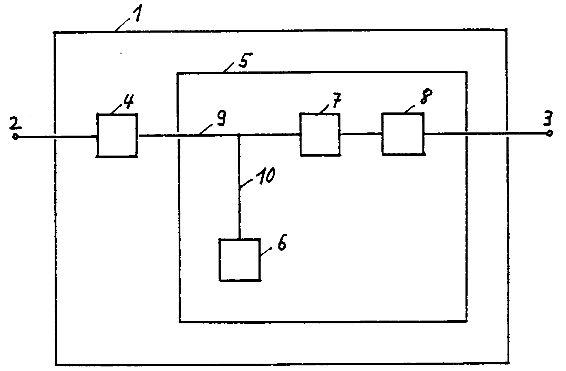

Ein Ausführungsbeispiel der Erfindung wird nun anhand der Zeichnung, die ein Blockschaltbild eines Wählsignalempfängers zeigt, näher beschrieben.

Ein Signalempfänger 1 weist einen Eingang 2 und einen Ausgang 3 auf, hier als einzelner, serieller Ausgang dargestellt. Der Empfänger 1 weist eine, einer Recheneinheit 5 vorgeschaltete Abtastschaltung 4 auf. Die Recheneinheit 5 weist einen Nullwert-Generator 6, eine Schaltung 7 zur Berechnung der Diskreten Fourier-Transformation und eine Einrichtung 8 zur Verarbeitung des Resultats der DFT auf. Die Einrichtung 8 kann die Resultate der DFT so aufarbeiten, dass bei einem Messgerät die genauen Pegel bei den vorbestimmten Frequenzen angegeben werden, oder aber bei einem Wählsignalempfänger in der Weise, dass am Ausgang 3 Wählsignale gemäss einer der genannten CCITT-Empfehlungen erscheinen.

Der nach dem erfindungsgemässen Verfahren arbeitende Signalempfänger 1 entnimmt mit Hilfe der Abtasteinrichtung 4 N Abtastwerte 9 aus dem Eingangssignal 2 und ermittelt anhand dieser Abtastwerte die Pegel des Eingangssignales bei gegebenen, meist nicht regelmässig verteilten Frequenzen. Zu diesem Zwecke macht die Recheneinheit eine DFT dieser Abtastwerte. Diese DFT wird aber nicht von den Abtastwerten 9 allein gemacht, sondern von einer Anzahl von Werten, die aus N Abtastwerten und M aufeinanderfolgenden Nullwerten besteht, was, wie bereits erwähnt, weder das Spektrum des Signales verändert noch den Rechenaufwand erhöht. Die Nullwerte werden von einem Nullwertgenerator 6 geliefert. Wie bereits erwähnt, verarbeitet die Einrichtung 8 das Ausgangssignal der Schaltung 7 derart, dass am Ausgang 3 das gewünschte Signal erscheint, z.B. der genaue Pegel eines Wählsignales und/oder das Wählsignal selbst.

Die nachstehende Tabelle zeigt die Pegel eines Eingangssignales bei den acht DTMF-Frequenzen. Das Eingangssignal enthält nur die beiden DTMF-Frequenzen 770 Hz und 1336 Hz je mit dem absoluten Pegel 1. Die linke Spalte enthält die Pegelmesswerte, wie sie von einem herkömmlichen Wählzeichenempfänger mit Hilfe des Goertzel-Algorithmus kombiniert mit einem stufenförmigen Interpolationsverfahren ermittelt wurden. Dabei wurden 205 Abtastwerte verwendet, also N = 205. Diese Anzahl wird allgemein als optimal für die Erkennung von DMTF-Wählzeichen anerkannt, wie dies z.B. aus [1] entnommen werden kann. Die rechte Spalte enthält die Pegelmesswerte, die mit einem nach der erfindungsgemässen Verfahren arbeitenden Wählzeichenempfänger ermittelt wurden. Die Anzahl der Abtastwerte war wiederum 205, also N = 205, und die Anzahl der Nullwerte wurde mit M = 7795 gewählt, so dass N + M = 8000 war, sich also ein Rasterabstand von 1 Hz ergab. Die Abtastfrequenz F war in beiden Fällen 8000 Hz.

| f [Hz] | Goertzel-Algorithmus mit stufenförm. Interpolation Pegel absolut / in [dB] | | Goertzel-Algorithmus mit Zero Filling Pegel absolut / in [dB] | |
|---|---|---|---|---|
| 697 | 0,14253 | -16,92 | 0,07408 | -22,61 |
| 770 | 0,88181 | -1,09 | 0,99982 | 0,00 |
| 852 | 0,10360 | -19,69 | 0,05490 | -25,21 |
| 941 | 0,05794 | -24,74 | 0,06521 | -23,71 |
| 1209 | 0,07180 | -22,88 | 0,07546 | -22,45 |
| 1336 | 0,91469 | -0,77 | 1,00012 | 0,00 |
| 1477 | 0,05523 | -25,16 | 0,07896 | -22,05 |
| 1633 | 0,02654 | -31,52 | 0,03605 | -28,86 |

Eine Bewertung der obigen Tabelle zeigt, dass die beiden gesendeten Wählsignalfrequenzen 770 Hz und 1336 Hz in der rechten Spalte mit ihrem vollen Pegel erscheinen und die Pegel bei den übrigen, nicht gesendeten Wählsignalfrequenzen einen konstanten und grossen Abstand zu den erstgenannten Wählsignalfrequenzen aufweisen. Dagegen zeigt die linke Spalte mindestens für die untere Frequenzgruppe deutlich kleinere Abstände und bei beiden gesendeten Frequenzen kleinere Pegel und zudem eine kleine Pegeldifferenz.

**Patentansprüche**

1. Verfahren zur Ermittlung der Pegel eines eingehenden Tonfrequenzsignales bei wählbaren, vorbestimmten Frequenzen mit digitaler Signalverarbeitung, bei welchem Verfahren das Eingangssignal abgetastet wird und die erhaltenen N Abtastwerte mit Hilfe einer Rechnereinheit einer Diskreten Fourier-Transformation gemäss dem Goertzel-Algorithmus unterworfen werden, dadurch gekennzeichnet, dass die N Abtastwerte durch die Rechnereinheit mit M aufeinanderfolgenden Nullwerten auf N + M Werte ergänzt werden, dass die Recheneinheit die Diskrete Fourier-Transformation von diesen N + M Werten durchführt, und dass die zu ermittelnden Pegel aus der so erhaltenen Fourier-Transformierten durch die Recheneinheit ohne Interpolation entnommen werden.

2. Verfahren nach Anspruch 1, dadurch gekennzeichnet, dass die N Abtastwerte und die M Nullwerte durch die Recheneinheit so angeordnet werden, dass die M Nullwerte wie Abtastwerte wirken, die chronologisch vor den N Abtastwerten eingetroffen sind.

3. Verfahren nach Anspruch 1 oder 2, dadurch gekennzeichnet, dass der Wert von N + M gleich der Masszahl der in Hz ausgedrückten Abtastfrequenz gewählt wird, so dass die genannten vorbestimmten Frequenzen in einem 1 Hz-Raster wählbar sind.

4. Verwendung des Verfahrens nach Anspruch 1 in einem Wählzeichenempfänger für Mehrfrequenz-Wählsignale in einer Nachrichtenvermittlungsanlage, dadurch gekennzeichnet, dass die genannten vorbestimmten Frequenzen derart gewählt werden, dass sie einem der Sätze von acht Frequenzen entsprechen, die von CCITT in den Empfehlungen Q.23, Q.320 oder Q.454 standardisiert wurden und für jede Ziffer Signale zweier unterschiedlicher Frequenzen vorsehen, welche gleichzeitig vorhanden sein müssen.

5. Wählzeichenempfänger nach Anspruch 4, gekennzeichnet durch eine Abtasteinrichtung (4) und durch eine Recheneinheit (5), welche einen Nullwertgenerator (6), eine Einrichtung (7) zur Berechnung der Diskreten Fourier-Transformation und eine Einrichtung (8) zur Auswertung des Resultates der Diskreten Fourier-Transformation aufweist.

## Claims

1. A method of determining the levels of an incoming voice frequency signal at selectable given frequencies with digital signal processing wherein the incoming signal is sampled and N received samples are subjected to a discrete Fourier transform in accordance with the Goertzel algorithm, characterized in that the N samples are supplemented by a processing unit with M successive zero values to N+M values, that the processing unit performs a discrete Fourier transform of said N+M values, and that the levels to be determined are taken from the Fourier transform without any interpolation.

2. A method according to claim 1, characterized in that the N samples and the M zero values are arranged by the processing unit in such a manner that the M zero values have the effect of samples having arrived chronologically prior to the N samples.

3. A method according to claim 1 or 2, characterized in that the value of N+M is chosen equal to the sampling frequency in Hz so that said given frequencies can be chosen out of a 1 Hz-grid.

4. Application of the method according to claim 1 in a dialling signal receiver for multifrequency dialling signals in a telecommunication switching system, characterized in that said given frequencies are so chosen that they correspond to one of the sets of eight frequencies being standardized by CCITT in the recommendations Q.23, Q.320 or Q.454 and providing for each digit signals of two different frequencies having to be present simultaneously.

5. Dialling receiver according to claim 4, characterized by a sampling device (4) and by a computing unit (5) comprising a zero value generator (6), a device (7) to calculate the discrete Fourier transform and a device (8) to evaluate the results of the discrete Fourier transform.

## Revendications

1. Procédé de détermination des niveaux d'un signal à fréquence acoustique entrant, à des fréquences sélectionnables prédéterminées, avec traitement numérique du signal, sur lequel procédé le signal d'entrée est balayé et les N valeurs de balayage obtenues sont soumise à l'aide d'une unité de calcul à une transformation de Fourier discrète selon l'algorithme de Goertzel, caractérisé en ce que l'unité de calcul ajoute aux N valeurs de balayage M valeurs zéro successives pour donner N + M valeurs, en ce que l'unité de calcul effectue la transformation de Fourier discrète de ces N + M valeurs, et en ce que les niveaux à déterminer sont extraits sans interpolation par l'unité de calcul des valeurs obtenues par la transformation de Fourier.

2. Procédé selon la revendication 1, caractérisé en ce que les N valeurs de balayage et les M valeurs zéro sont disposées par l'unité de calcul, de façon à ce que les M valeurs zéro agissent comme des valeurs de balayage, qui arrivent dans le temps avant les N valeurs de balayage.

3. Procédé selon une des revendications 1 ou 2, caractérisé en ce que la valeur de N + M est choisie de façon à être égale à la valeur dimensionnelle de la fréquence de balayage exprimée en Hz, de façon à ce que les fréquences prédéfinies mentionnées puissent être choisies sur une trame de 1 Hz.

4. Utilisation du procédé selon la revendication 1 sur un récepteur de tonalités de manoeuvre pour signaux de manoeuvre multifréquence sur une installation de transmission d'informations, caractérisé en ce que les fréquences prédéfinies mentionnées sont choisies de façon à ce qu'elles correspondent à un des jeux de huit fréquences qui ont été standardisées par le CCITT dans une des recommandations Q.23, Q.320 où Q.454 et prévoient pour chaque signal numérique deux fréquences différentes, qui doivent être présentes en même temps.

5. Récepteur de tonalités de manoeuvre selon la revendication 4, caractérisé par un dispositif de balayage (4) et une unité de calcul (5), qui présente un générateur de valeurs zéro (6), un dispositif (7) de calcul de la transformation de Fourier discrète, et un dispositif (8) d'évaluation du résultat de la transformation de Fourier discrète.